# EUROPEAN PATENT SPECIFICATION

(11) **EP 0 518 830 B1**
(45) Date of publication and mention of the grant of the patent: **21.02.1996**
(21) Application number: 92830283.5
(22) Date of filing: 02.06.1992
(51) Int. Cl.: B60N 2/44, A47C 7/46

(54) **A back support for a seat, particularly a motor-vehicle seat**
Rückenstütze für Sitze, insbesondere für Kraftfahrzeugsitze
Appui dorsal pour sièges, en particulier pour sièges de véhicules automobiles

(30) Priority: 11.06.1991 IT TO910442
(43) Date of publication of application: 16.12.1992
(73) Proprietor: FIAT AUTO S.p.A., I-10135 Torino (IT)
(72) Inventor: Dal Monte, Antonio, I-00196 Roma (IT)
(74) Representative: Bosotti, Luciano

(56) References cited:
- EP-A- 0 420 824
- DE-A- 3 341 389
- DE-A- 3 619 188
- US-A- 4 155 592
- US-A- 4 469 374

## Description

The present invention relates to back supports for seats, for example, for motor-vehicle seats and particularly concerns a development of the solution described in the Applicant's prior European patent application EP-A-0 420 824 (corresponding to the preamble of claim 1).

This prior application describes the possibility of providing the backrest of a motor-vehicle seat with a lumbar support (or a general back support) constituted by a substantially butterfly- or hourglass-shaped horizontal band or strip, preferably constituted by two complementary and symmetrical portions which are articulated to each other in correspondence with the vertical median plane of the backrest so that the profile of the support can adapt, preferably completely automatically, to allow for the width of the seat-occupant's back.

In particular, the present invention addresses the problem of providing a support of this type which, for example, by means of a manual or electrical control, can provide greatly increased lateral restraint such as that provided, for example, by the backrests of sports-car seats, whilst at the same time retaining its ability to adapt to different body sizes.

According to the present invention, this problem is solved by means of a back support having the specific characteristics recited in the characterising part of claim 1. Further characteristics are given in the claims which follow.

The invention will now be described, purely by way of non-limiting example, with reference to the appended drawings, in which:
Figure 1 shows schematically a portion of a seat, such as a motor-vehicle seat, in which a support according to the invention is fitted, and
Figures 2 and 3 are imaginary views from above, taken on the arrow II of Figure 1 and showing two possible operating conditions of the element according to the invention.

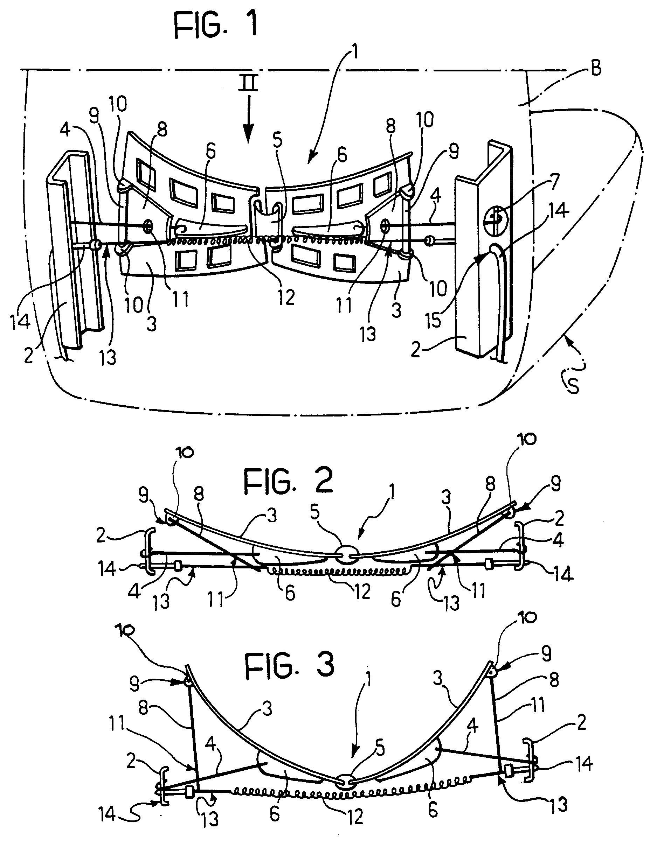

In the drawings, a back support, generally indicated 1, is intended to be fitted in the backrest B of a seat S, such as a motor-vehicle seat, the outline of which is shown partially by a broken line in Figure 1.

In practice, the support 1 is constituted by a band or strip which extends generally horizontally at the level of the lumbar region of the back of the occupant of the seat S and is generally hourglass- or butterfly-shaped, that is, it has a narrow central portion and increases progressively in height towards its outer edges which face the lateral uprights 2 of the backrest frame.

The support 1 is constituted substantially by two complementary portions 3 which are generally specularly symmetrical with respect to the vertical median plane of the backrest B and each of which is fastened to the respective upright 2 of the backrest by a horizontal tie 4. The two portions 3, which are made of a rigid material (for example, metal or rigid plastics) with holes for lightness, are articulated to each other at their mutually facing inner edges (that is, in correspondence with the vertical median plane of the backrest B) by connecting element 5 constituted, for example, by an annular sleeve of resilient material (for example, rubber).

The foregoing is all in accordance with the principles and for the purposes described in greater detail in the European patent application EP-A-0 420 824 mentioned above, to which reference should be made for a more general description of operation of the support 1.

In particular, it can be seen that the inner ends of the ties 4 are fastened to brackets or flanges 6 which project from the rear faces of the portions 3 which are generally concave forwardly of the backrest B.

The opposite ends of the ties 4 have hook-shaped portions which can, for example, engage cross-ties 7 extending vertically in holes or eyes in the core portions of the uprights 2, which are of C-shaped cross-section.

Two flaps 8 are also mounted on the rear (convex) faces of the portions 3, again in a generally symmetrical arrangement with respect to the vertical median plane of the backrest B, the outer end of each being articulated to the homologous end of the respective portion 3.

In practice, each flap 8 may have a shaft 9 at its outer end for engaging two hinge eyes 10 above and below the flap 8 respectively so that the flap 8 can pivot relative to the respective portion 3 of the support 1 about a vertical axis which in practice corresponds to the axis of the shaft 9.

Each flap 8 also has a hole 11, preferably near its free end, for the passage of the tie 4 which connects the respective portion 3 of the support 1 to the homologous upright 2.

The free ends of the flaps 8 are interconnected by a resilient element 12, such as a spring, which acts in a direction such as to bias the flaps 8 generally towards each other and move the two portions 3 so as to cause a general straightening out and widening of the front of the support 1. Under the action of the biasing spring 12 alone, the support 1 thus tends spontaneously to assume the condition of least vertical concavity shown in Figure 2.

Each of two flexible-cable controls (so-called "Bowden" cables), indicated 13, has a sheath 14 which extends along the respective upright 2 in the backrest and through a hole 15 therein, the sheaths 14 converging generally inwardly of the backrest B so that the end of the tension wire in each sheath (that is, the actual cable) is connected to the homologous flap 8 adjacent the free end thereof, that is, in the region in which the flap is connected to the biasing spring 12.

The operation of the flexible-cable controls 13 (by known means, for example, by a manual control lever, or by a motor, which are not shown since they are not relevant per se for an understanding of the invention) moves the free ends of the flaps 8 apart so as to induce a general forward movement in the region (of the shaft 9) in which each flap 8 is articulated to the respective portion 3 of the support 1. In practice, this corresponds to a forward movement of the outer ends of the portions 3 and hence of the support 1 which thus tends to assume its most arcuate and convex shape shown schematically in Figure 3. In this condition, the backrest can provide considerable lateral restraint for the seat-occupant's back, substantially such as is provided, for example, by the seats of some sports cars.

Naturally, if the flexible-cable controls 13 are released, the free ends of the flaps 8 tend to return towards each other under the biasing force exerted by the spring 12 so that the support 1 tends to resume its least convex position of Figure 2. In this condition, it should be noted in general that, precisely because of the presence of the resilient biasing element 12, the support 1 retains its ability to adapt automatically in an excellent manner to the size of the seat-occupant's back and to the stresses applied to the backrest B thereby.

The free ends of the flaps 8 need not necessarily be moved fully apart, consequently moving the outer ends of the portions 3 fully forwards as shown in Figure 3, but may stop in any intermediate position, enabling excellent adjustment to the requirements or tastes of the occupant of the seat.

It will be appreciated that, in practice, the result described is achieved because each of the two portions 3 which constitute the support 1 is connected to its flap 8 in a generally book-like arrangement by means of a substantially vertical articulation axis 9 at the outer end of the portion 3. The movement apart of the free ends of the flaps 8 (and the sliding connections between the flaps 8 and the ties 4 which extend through the holes 11) thus gives rise to the aforementioned general forward movement of the articulation regions (the shafts 9) and consequently of the outer ends of the portions 3.

In the solution according to the invention, the ties 4 thus have two functions, that is, they connect the respective portions 3 of the support 1 to the perimetral structure of the backrest (the uprights 2) and they provide tracks along which the flaps 8 can slide when their free ends are pulled outwardly as a result of the traction exerted by the flexible-cable control 13 overcoming the tension of the biasing element 12.

Each flap 8 thus moves outwardly by sliding along the corresponding metal tie 4, which acts as a guide.

Finally, in use, the system according to the invention can operate in the following ways:
i) if the flexible cables 13 are left slack so that the flaps 8 are biased towards the centre of the backrest by the resilient element 12, the backrest B behaves like a self-adjusting backrest, that is, its restraint is varied on the basis of the body size of the occupant of the seat, and
ii) if the free ends of the flaps 8 are moved outwardly by a pull exerted manually or by a drive member (for example, an electric motor) thus moving the outer ends of the portions 3 of the support 1 forwardly, conditions of much greater lateral restraint are achieved, according to the seat-occupant's wishes, until the conditions usually adopted in vehicles used for racing are achieved.

Naturally, the principle of the invention remaining the same, the details of construction and forms of embodiment may be varied widely with respect to those described and illustrated, provided that they do not depart from the scope of the present invention as defined in the appended claims. This applies particularly to the possibility of guiding the movement apart of the flaps 8 by guide means other than the ties 4.

## Claims

1. A back support for a backrest (B) for a seat (S), for example, a motor-vehicle seat, including two complementary portions (3) which are interconnected (5) in correspondence with the vertical median plane of the backrest (B) so that they can pivot relative to each other about a vertical axis in use in a manner such that the general concavity of the support (1) is variable, wherein operating means (13) are provided, for the purpose of making the profile of the support variable, characterised in that:
- a flap (8) associated with each complementary portion (3) has a first end (9) which is connected in a generally book-like manner to the outer end of the respective complementary portion (3), relative to the seat, so that the flap can pivot about an axis which is substantially vertical in use, and a second, free end which can project towards the other complementary portion (3), and in that:
- said operating means (13) are associated with the flaps (8) and act on their free ends so as selectively to move apart the free ends of said flaps (8) and consequently to move the outer ends of the complementary portions (3) forwardly, thus changing the profile of the support (1) towards a generally more concave configuration.

2. A support according to Claim 1, characterised in that resilient biasing means (12) are interposed between the free ends of the flaps (8) to bias them towards each other against the action of the operating means (13).

3. A support according to Claim 1 characterised in that the complementary portions (3) are interconnected by a generally annular connecting element (5).

4. A support according to any one of Claims 1 to 3, characterised in that it is generally hourglass- or butterfly-shaped, being narrowest in the region in which the complementary portions (3) are connected and increasing progressively in depth towards the outer ends of the complementary portions (3).

5. A support according to any one of Claims 1 to 4, characterised in that the flaps (8) become progressively narrower towards their free ends.

6. A support according to any one of the preceding claims, characterised in that the operating means (13) include at least one flexible-cable control (13, 14).

7. A support according to Claim 1, characterised in that the operating means include two flexible cables (13, 14) which act on the flaps (8) in a generally specularly symmetrical arrangement.

8. A support according to any one of the preceding claims, characterised in that:
- each complementary portion (3) is connected to a respective portion (2) of the structure of the backrest (B) by a horizontal tie (4), and
- the respective flap (8) has a hole (11) through which the tie (4) extends so that as the flaps (8) move apart they slide along the ties (4).

9. A support according to Claim 8, characterised in that the holes (11) through which the ties (4) extend are substantially near the free end of each flap (8).

## Patentansprüche

1. Rückenstütze für eine Rückenlehne (B) eines Sitzes (S), zum Beispiel eines Kraftfahrzeugsitzes, umfassend zwei einander ergänzende Elemente (3), welche in der vertikalen Mittelebene der Rückenlehne (B) miteinander verbunden sind (5), sodaß sie bei Gebrauch um eine vertikale Achse so zueinander schwenkbar sind, daß die allgemeine Hohlwölbung der Stütze (1) variierbar ist, wobei Betätigungsmittel (13) vorgesehen sind, um das Profil der Stütze variierbar zu gestalten, dadurch gekennzeichnet, daß:
- jedem Ergänzungselement (3) eine Klappe (8) zugeordnet ist, die ein erstes Ende (9) aufweist, welches mit dem äußeren Ende des entsprechenden Ergänzungselementes (3) im wesentlichen buchartig so verbunden ist, daß die Klappe um eine im wesentlichen vertikale Achse schwenkbar ist, und ein zweites, freies Ende aufweist, welches zum anderen Ergänzungselement (3) gerichtet sein kann, und daß:
- die genannten Betätigungsmittel (13) den Klappen (8) zugeordnet sind und auf deren freie Enden so wirken, daß die freien Enden der Klappen (8) wahlweise auseinanderbewegt und in der Folge die äußeren Enden der Ergänzungselemente (3) nach vorne bewegt werden, wodurch das Profil der Stütze (1) zu einer im wesentlichen konkaveren Form verändert wird.

2. Stütze nach Anspruch 1, dadurch gekennzeichnet, daß elastische Vorspannmittel (12) zwischen den freien Enden der Klappen (8) angeordnet sind, um diese gegen die Wirkung der Betätigungsmittel (13) zueinander zu spannen.

3. Stütze nach Anspruch 1, dadurch gekennzeichnet, daß die Ergänzungselemente (3) durch ein im wesentlichen ringförmiges Verbindungselement (5) miteinander verbunden sind.

4. Stütze nach einem der Ansprüche 1 bis 3, dadurch gekennzeichnet, daß sie im wesentlichen die Form eines Stundenglases oder eines Schmetterlinges aufweist, wobei sie am schmalsten in jenem Bereich ist, in dem die Ergänzungselemente (3) miteinander verbunden sind, und zu den äußeren Enden der Ergänzungselemente (3) hin fortlaufend breiter wird.

5. Stütze nach einem der Ansprüche 1 bis 4, dadurch gekennzeichnet, daß die Klappen (8) zu ihren freien Enden hin fortlaufend schmäler werden.

6. Stütze nach einem der vorhergehenden Ansprüche, dadurch gekennzeichnet, daß die Betätigungsmittel (13) mindestens einen biegbaren Seilzug (13, 14) umfassen.

7. Stütze nach Anspruch 1, dadurch gekennzeichnet, daß die Betätigungsmittel zwei biegbare Seilzüge (13, 14) umfassen, die auf die Klappen (8) in einer im wesentlichen spiegelbildlichen, symmetrischen Anordnung wirken.

8. Stütze nach einem der vorhergehenden Ansprüche, dadurch gekennzeichnet, daß :
- jedes Ergänzungselement (3) mit einem entsprechenden Abschnitt (2) der Konstruktion der Rückenlehne (B) mit Hilfe einer horizontalen Stange (4) verbunden ist, und,
- die entsprechende Klappe (8) ein Loch (11) aufweist, durch welches die Stange (4) sich erstreckt, sodaß die Klappen (8) beim Auseinanderbewegen entlang der Stangen (4) gleiten.

9. Stütze nach Anspruch 8, dadurch gekennzeichnet, daß die Löcher (11), durch welche sich die Stangen (4) erstrecken, im wesentlichen nahe dem freien Ende jeder Klappe (8) angeordnet sind.

## Revendications

1. Appui dorsal pour un dossier (B) appartenant à un siège (S), par exemple à un siège de véhicule automobile, comprenant deux parties complémentaires (3) qui sont reliées (5), en correspondance du plan médian vertical du dossier (B), de manière à pouvoir pivoter l'une par rapport à l'autre autour d'un axe vertical en utilisation, d'une façon telle que la concavité générale de l'appui (1) soit variable, dans lequel des moyens d'actionnement (13) sont prévus pour rendre le profil de l'appui variable, caractérisé en ce que :
- un volet (8) associé à chacune des parties complémentaires (3) possède une première extrémité (9) qui est reliée à la façon générale d'un livre à l'extrémité extérieure de la partie complémentaire (3) respective, par rapport au siège, de sorte que le volet peut pivoter autour d'un axe qui est sensiblement vertical en utilisation, et une deuxième extrémité libre, qui peut faire saillie vers l'autre partie complémentaire (3) et en ce que :
- lesdits moyens d'actionnement (13) sont associés aux volets (8) et agissent sur leurs extrémité libres de manière à écarter sélectivement les extrémités libres desdits volets (8) et à faire ainsi avancer les extrémités extérieures des parties complémentaires (3), en modifiant ainsi le profil de l'appui (1) en tendant vers une configuration générale plus concave.

2. Appui selon la revendication 1, caractérisé en ce que des moyens de rappel élastiques (12) sont interposés entre les extrémités libres des volets (8) pour les rappeler l'une vers l'autre à l'encontre de l'action des moyens d'actionnement (13).

3. Appui selon la revendication 1, caractérisé en ce que les parties complémentaires (3) sont reliées par un élément de liaison (5) de forme générale annulaire.

4. Appui selon une quelconque des revendications 1 à 3, caractérisé en ce qu'il est de façon générale en forme de sablier ou de papillon, étant le plus étroit dans la région dans laquelle les parties complémentaires (3) sont reliées l'une à l'autre et croissent progressivement en largeur vers les extrémités extérieures des parties complémentaires (3).

5. Appui selon une quelconque des revendications 1 à 4, caractérisé en ce que les volets (8) se rétrécissent progressivement vers leurs extrémités libres.

6. Appui selon une quelconque des revendications précédentes, caractérisé en ce que les moyens d'actionnement (13) comprennent au moins une commande à câble flexible (13, 14).

7. Appui selon la revendication 1, caractérisé en ce que les moyens d'actionnement comprennent deux câbles flexibles (13, 14) qui agissent sur les volets (8) dans une disposition sensiblement symétrique en miroir.

8. Appui selon une quelconque des revendications précédentes, caractérisé en ce que :
- chaque partie complémentaire (3) est reliée à une partie (2) respective de la structure du dossier (B) par une attache horizontale (4), et
- le volet (8) respectif présente un trou (11) à travers lequel l'attache (4) passe de façon que, lorsque les volets (8) s'écartent, ils glissent le long des attaches (4).

9. Appui selon la revendication 8, caractérisé en ce que les trous (11) à travers lesquels les attaches (4) passent sont sensiblement proches de l'extrémité libre de chaque volet (8).
